# EUROPÄISCHE PATENTSCHRIFT

(11) **EP 1 318 272 B1**
(45) Veröffentlichungstag und Bekanntmachung des Hinweises auf die Patenterteilung: **16.04.2008**
(21) Anmeldenummer: 02019941.0
(22) Anmeldetag: 05.09.2002
(51) Int. Cl.: F01D 5/08

(54) **Kühlluftwirbelgleichrichter im Hochdruckverdichterrotor einer Gasturbine**
Deswirl guide for cooling air in a gas turbine rotor
Guide anti-tourbillon pour l'air de refroidissement dans le rotor d'une turbine à gaz

(30) Priorität: 05.12.2001 DE 10159670
(43) Veröffentlichungstag der Anmeldung: 11.06.2003
(73) Patentinhaber: Rolls-Royce Deutschland Ltd & Co KG, 15827 Dahlewitz (DE)
(72) Erfinder: Hein, Stefan, 12305 Berlin (DE); Stein, Manuela, 10439 Berlin (DE); Peitsch, Dieter, Dr., 12437 Berlin (DE)
(74) Vertreter: Wablat, Wolfgang

(56) Entgegenhaltungen:
- DE-A- 19 852 604
- FR-A- 2 614 654
- US-A- 2 618 433
- US-A- 4 595 339
- US-A- 5 472 313

## Beschreibung

Die Erfindung bezieht sich auf einen Wirbelgleichrichter in Röhrenbauweise für einen Hochdruckverdichter einer Gasturbine gemäß dem Oberbegriff der unabhängigen Ansprüche 1 bis 3.

Im Einzelnen bezieht sich die Erfindung auf einen Wirbelgleichrichter, bei welchem in einer Zwischenscheibenkammer Sekundärluftröhren angeordnet sind.

Aus dem Stand der Technik ist es bekannt, zur Strömungsführung der Sekundärluft in einer Zwischenscheibenkammer Sekundärluftröhren zu verwenden. Ganz allgemein sind derartige Konstruktionen beispielsweise in der DE 26 33 222 A1 oder der US 3,043,561 beschrieben.

Die US-A-5 472 313 beschreibt einen Wirbelgleichrichter in Röhrenbauweise zur Kühlluftführung in einem Verdichter einer Gasturbine mit mindestens einer sich radial in einer Zwischenscheibenkammer erstreckenden Sekundärluftröhre, in deren Ausströmbereich zur Vermeidung einer weiteren Verwirbelung sowie von Druckverlusten ein Umlenkmittel zur Kühlluftumlenkung in Längsrichtung der Turbine angeordnet ist.

Als nachteilig bei diesen Konstruktionen erweist es sich, dass durch Wirbelbildung am Austritt der Sekundärluftröhre Druckverluste und Dissipationen entstehen.

Der Erfindung liegt die Aufgabe zugrunde, einen Wirbelgleichrichter der eingangs genannten Art zu schaffen, welcher bei einfachem Aufbau und einfacher, zuverlässiger Wirksamkeit die Nachteile des Standes der Technik vermeidet und eine wirksame Führung der Sekundärluft ermöglicht.

Erfindungsgemäß wird die Aufgabe mit einem gemäß den Merkmalen der unabhängigen Ansprüche 1 bis 3 ausgebildeten Wirbelgleichrichter gelöst. Der abhängige Anspruch 4 zeigt weitere vorteilhafte Ausgestaltungen der Erfindungen auf.

Erfindungsgemäß ist somit vorgesehen, dass im Ausströmbereich der Sekundärluftröhre Umlenkmittel zur Umlenkung der Sekundärluftströmung in axialer Richtung angeordnet sind wobei das Umlenkmittel in einer ersten Ausführungsform ein auf einer Verdichterwelle angeordneter konusförmiger Umlenkring, in einer zweiten Ausführungsform ein um etwa 45° abgewinkeltes Umlenkblech und in einer dritten Ausführungsform ein einstückig mit der Sekundarluftröhre zusgebildetes, um 90° zu deren Mittellinie gebogenes Auslaufrohr ist.

Der erfindungsgemäße Wirbelgleichrichter zeichnet sich durch eine Reihe erheblicher Vorteile aus.

Wie bekannt, verursacht die radiale Luftentnahme bei sehr hohen Rotationsgeschwindigkeiten des Verdichters und die anschließende Umlenkung der Sekundärluft in axiale Richtung einen hohen Druckverlust. Um diesen Druckverlust zu vermindern und einen möglichst kleinen Druckabfall zu erreichen, werden die genannten Wirbelgleichrichter (Vortex Reducer) eingesetzt. Im einfachsten Fall sind diese in Form gerader, radial nach innen gerichteter Rohrsysteme (Sekundärluftröhren) ausgestaltet, in welchen die Sekundärluft zwangsgeführt wird. Dabei erweist es sich als vorteilhaft, dass die Sekundärluft beim radialen Durchströmen der Zwischenscheibenkammer nach innen zur Wellemitte hin eine geringe Zunahme ihrer Umfangsgeschwindigkeit erfährt. Damit fällt der sich ergebende Druckabfall geringer aus, als dies im Vergleich zum nicht drallreduzierten System der Fall wäre.

Um nun eine weitere Reduzierung des Druckverlustes zu erreichen, ist es erfindungsgemäß vorgesehen, dass im Ausströmbereich der Sekundärluftröhre die besagten Umlenkmittel der Sekundärluftströmung in axiale Richtung angeordnet sind.

Hierdurch ist es möglich, den Austrittswirbel aus der Sekundärluftröhre zu verringern.

Die Lösung mit einem auf der Verdichterwelle befestigten Umlenkring ist technisch einfach realisierbar und gewährleistet auch bei hohen Drehzahlen eine sichere Umlenkung der Luftströmung.

Die wirksame Umlenkfläche des Umlenkringes ist bevorzugterweise im Wesentlichen 45° zu Mittelebene der Drehachse der Verdichterwelle angeordnet. Die Umlenkfläche weist somit in Richtung der zu erzielenden axialen Luftströmung und führt zu einem vorteilhaften Strömungsverhalten.

Der Umlenkring kann in einfacher Weise zwischen den benachbarten, die Zwischenscheibenkammer bildenden Rotorscheiben oder Verdichterscheiben, beispielsweise der Rotorscheibe der Stufe 6 und der Rotorscheibe der Stufe 7, montiert sein.

Die Ausrichtung der Umlenkfläche des Umlenkringes kann somit im Wesentlichen 45 ° zur radialen Mittelebene der Sekundärluftröhre erfolgen.

Das als Umlenkblech ausgebildete Umlenkmittel ist bevorzugterweise im Ausströmbereich der Sekundärluftröhre an dieser ausgebildet. Bevorzugterweise ist das Umlenkblech im Wesentlichen eben ausgestaltet. Seine Anordnung kann um 45° zur radialen Mittelebene der Sekundärluftröhre positioniert sein. In einer bevorzugten Weiterbildung ist es auch möglich, das Umlenkblech um 90° zu drehen, so dass es eine Umlenkung der Luftströmung gegen die Drehrichtung der Kompressorwelle bewirkt.

Das einstückig mit der Sekundärluftröhre ausgebildete Auslaufrohr kann beispielsweise um 90° zur Mittellinie der Sekundärluftröhre abgewinkelt oder abgebogen sein. Auch hierbei kann es günstig sein, wenn die Auslassöffnung des Auslaufrohres gegen die Drehrichtung der Kompressorwelle angeordnet ist. Diese Umlenkung führt zu einer weiteren Abkühlung der Sekundärluft.

Im Folgenden wird die Erfindung anhand von Ausführungsbeispielen in Verbindung mit der Zeichnung beschrieben. Dabei zeigt:
- Fig. 1: eine schematische Teil-Seitenansicht einer erfindungsgemäßen Gasturbine,
- Fig. 2: eine vergrößerte Teil-Schnittansicht eines ersten Ausführungsbeispiels des erfindungsgemäßen Wirbelgleichrichters,
- Fig. 3: eine stirnseitige Ansicht der in Fig. 2 gezeigten Anordnung,
- Fig. 4: ein abgewandeltes Ausführungsbeispiel unter Verwendung eines Umlenkbleches,
- Fig. 5: eine Seitenansicht der in Fig. 4 gezeigten Sekundärluftröhre,
- Fig. 6: ein weiteres Ausführungsbeispiel, analog dem in Fig. 4 gezeigten Ausführungsbeispiel,
- Fig. 7: eine Seitenansicht der in Fig. 6 gezeigten Sekundärluftröhre,
- Fig. 8: eine Ansicht, ähnlich den Figuren 4 und 6, eines weiteren Ausführungsbeispiels, und
- Fig. 9: eine um 90° gedrehte Ansicht der Sekundärluftröhre gemäß dem Ausführungsbeispiel von Fig. 8.

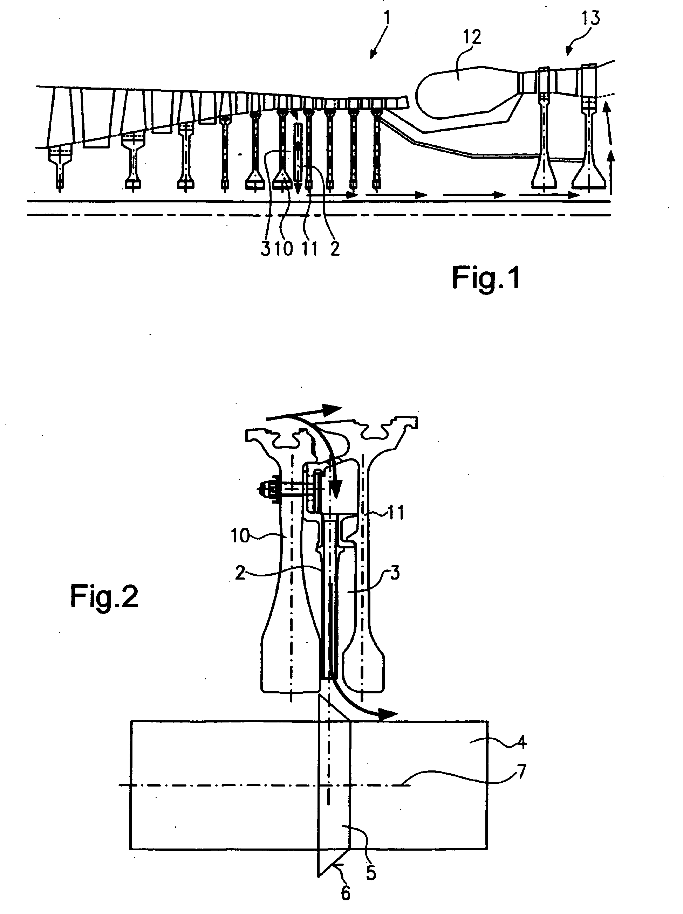

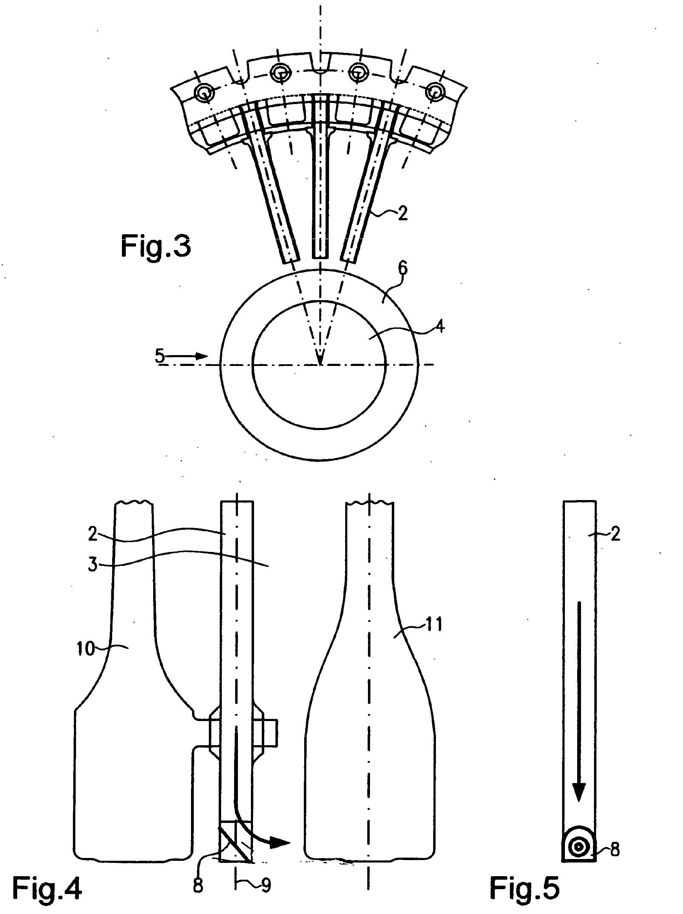

Die Fig. 1 zeigt in schematischer Ausgestaltung einen Teilbereich einer Gasturbine. Mit dem Bezugszeichen 1 ist ein Verdichter oder Kompressor dargestellt, welcher mehrere Verdichterscheiben oder Rotorscheiben umfasst. Das Bezugszeichen 10 bezeichnet beispielsweise eine Verdichterscheibe der Stufe 6, während das Bezugszeichen 11 eine Verdichterscheibe der Stufe 7 zeigt. Zwischen diesen ist eine Zwischenscheibenkammer 3 ausgebildet, in welcher sich eine Vielzahl von radial angeordneten Sekundärluftröhren 2 befindet (siehe auch Fig. 3). Die Anordnung und konstruktive Ausgestaltung der Sekundärluftröhren 2 ist aus dem Stand der Technik bekannt, so dass auf eine detailliertere Beschreibung an dieser Stelle verzichtet werden kann. In Fig. 1 ist weiterhin schematisch eine Brennkammer 12 dargestellt, ebenso wie eine nur schematisch gezeigte Turbine 13. Die Fig. 1 verdeutlicht weiterhin in stark vereinfachter Weise die Kühlluftströme. Auch diese sind aus dem Stand der Technik bekannt, so dass auf weitere Beschreibungen an dieser Stelle ebenfalls verzichtet werden kann.

Die Fig. 2 zeigt ein erstes Ausführungsbeispiel der Erfindung. Dabei ist im Auslaufbereich der Sekundärluftröhre 2 auf einer Kompressorwelle 4 ein Umlenkring 5 befestigt, welcher im Wesentlichen kegelstumpfförmig ausgebildet ist und somit eine Umlenkfläche 6 aufweist, welche im Wesentlichen um 45° zur radialen Drehebene bzw. zu einer durch die Drehachse 7 gelegten Mittelachse ausgerichtet ist. Die Luftströmung wird somit beim Austritt aus den Sekundärluftröhren umgelenkt, so wie dies durch den Pfeil dargestellt ist.

Die Fig. 3 zeigt eine stirnseitige Ansicht der Anordnung gemäß Fig. 2.

Die Fig. 4 und 5 beschreiben eine weitere Ausgestaltungsvariante, bei welcher im Ausströmbereich der Sekundärluftröhre 2 jeweils ein im Wesentlichen ebenes Umlenkblech 8 montiert ist, dessen Fläche um 45° zur Mittelebene 9 der Sekundärluftröhre 2, bezogen auf eine radiale Mittelebene, ausgerichtet ist.

Die Fig. 5 zeigt eine um 90° gedrehte Ansicht des Ausströmbereichs der Sekundärluftröhre gemäß Fig. 4.

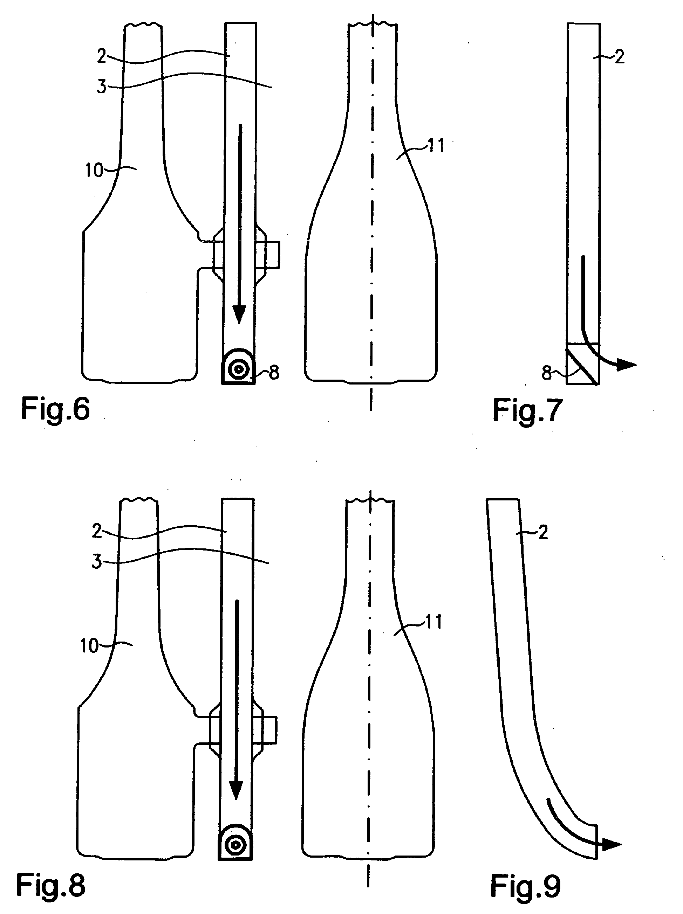

In den Fig. 6 und 7 ist eine weitere Ausgestaltungsvariante dargestellt, bei welcher das Umlenkblech 8 so positioniert ist, dass eine Umlenkung der austretenden Luftströmung gegen die Drehrichtung der Verdichterwelle 4 erfolgt. Die Fig. 7 zeigt eine Seitenansicht der Sekundärluftröhre gemäß Fig. 6 in einer um 90° gedrehten Anordnung.

Die Figuren 8 und 9 zeigen ein weiteres Ausführungsbeispiel, bei welchem der untere Bereich der Sekundärluftröhre gebogen oder abgewinkelt ist, so dass die Ausströmöffnung im wesentlichen 90° zur Ebene der Einströmöffnung ausgerichtet ist.

Die Erfindung ist nicht auf die gezeigten Ausführungsbeispiele beschränkt, vielmehr ergeben sich im Rahmen der Ansprüche Erfindung vielfältige Abwandlungs- und Modifikationsmöglichkeiten.

### Bezugszeichenliste:

- 1: Dichter
- 2: Sekundärluftröhre
- 3: Zwischenscheibenkammer
- 4: Verdichterwelle
- 5: Umlenkring
- 6: Umlenkfläche
- 7: Drehachse
- 8: Umlenkfläche
- 9: Mitteleben
- 10: Verdichterscheibe
- 11: Verdichterscheibe
- 12: Brennkammer
- 13: Turbine

## Patentansprüche

1. Wirbelgleichrichter in Röhrenbauweise zur Kühlluftführung in einem Verdichter (1) einer Gasturbine mit mindestens einer sich radial in einer Zwischenscheibenkammer (3) erstreckenden Sekundärluftröhre (2), in deren Ausströmbereich zur Vermeidung einer weiteren Verwirbelung sowie von Druckverlusten Umlenkmittel (6) zur Kühlluftumlenkung in Längsrichtung der Gasturbine angeordnet sind, **dadurch gekennzeichnet, dass** das Umlenkmittel ein auf einer Verdichterwelle (4) anordenbarer konusförmiger Umlenkring (5) ist.

2. Wirbelgleichrichter in Röhrenbauweise zur Kühlluftführung in einem Verdichter (1) einer Gasturbine mit mindestens einer sich radial in einer Zwischenscheibenkammer (3) erstreckenden Sekundärluftröhre (2), in deren Ausströmbereich Umlenkmittel (6, 8) zur Sekundärluftumlenkung in einem vorgegebenen Winkel in Längsrichtung zur Drehachse (7) der Verdichterwelle (4) eines Verdichters (1) oder alternativ senkrecht zur Drehachse (7) und entgegen der Drehrichtung der Verdichterwelle (4) anordenbar sind, **dadurch gekennzeichnet, dass** das Umlenkmittel ein zur Mittellinie der Sekundärluftröhre (2) um etwa 45° abgewinkeltes Umlenkblech (8) ist.

3. Wirbelgleichrichter in Röhrenbauweise zur Kühlluftführung in einem Verdichter (1) einer Gasturbine mit mindestens einer sich radial in einer Zwischenscheibenkammer (3) erstreckenden Sekundärluftröhre (2), in deren Ausströmbereich Umlenkmittel (6, 8) zur Sekundärluftumlenkung in einem vorgegebenen Winkel in Längsrichtung zur Drehachse (7) der Verdichterwelle (4) eines Verdichters (1) oder alternativ senkrecht zur Drehachse (7) und entgegen der Drehrichtung der Verdichterwelle (4) anordenbar sind, **dadurch gekennzeichnet, dass** das Umlenkmittel ein einstückig mit der Sekundärluftröhre (2) ausgebildetes um etwa 90° zu deren Mittellinie gebogenes Auslaufrohr ist.

4. Wirbelgleichrichter nach Anspruch 2 oder 3, **dadurch gekennzeichnet, dass** das Umlenkmittel (8) in Längsrichtung der Verdichterwelle (4) ausrichtbar ist oder - um die Längsachse der Sekundärluftröhre (2) um 90° gedreht- senkrecht zur Drehachse und entgegen der Drehrichtung der Verdichterwelle (4) ausrichtbar ist.

## Claims

1. Tube-type vortex reducer for the conduction of cooling air in a compressor (1) of a gas turbine with at least one radially extending secondary air tube (2) arranged in a disk interspace (3), with deflection means (6) for the deflection of the cooling air in the longitudinal direction of the gas turbine being provided in the discharge area of the tube to avoid further vortex formation and pressure losses, **characterized in that** the deflection means is a conical deflector ring (5) that can be installed on a compressor shaft (4).

2. Tube-type vortex reducer for the conduction of cooling air in a compressor (1) of a gas turbine with at least one radially extending secondary air tube (2) arranged in a disk interspace (3), with deflection means (6) for the deflection of the secondary air at a predefined angle in longitudinal direction to the rotational axis (7) of the compressor shaft (4) of a compressor (1) or alternatively perpendicularly to the rotational axis (7) and against the direction of rotation of the compressor shaft (4) being providable in the discharge area of the tube, **characterized in that** the deflection means is a deflector plate (8) angled at about 45° to the center line of the secondary air tube (2).

3. Tube-type vortex reducer for the conduction of cooling air in a compressor (1) of a gas turbine with at least one radially extending secondary air tube (2) arranged in a disk interspace (3), with deflection means (6) for the deflection of the secondary air at a predefined angle in longitudinal direction to the rotational axis (7) of the compressor shaft (4) of a compressor (1) or alternatively perpendicularly to the rotational axis (7) and against the direction of rotation of the compressor shaft (4) being providable in the discharge area of the tube, **characterized in that** the deflection means is an outlet tube which forms one piece with the secondary air tube (2) and is bent by about 90° to the tube center line.

4. Vortex reducer in accordance with Claim 2 or 3, **characterized in that** the deflection means (8) is orientable in the longitudinal direction of the compressor shaft (4) or - tilted by 90° around the longitudinal axis of the secondary air tube (2) - perpendicularly to the rotational axis and against the direction of rotation of the compressor shaft (4).

## Revendications

1. Réducteur de tourbillons de construction tubulaire destiné à guider l'air de refroidissement dans un compresseur (1) d'une turbine à gaz avec au moins un tube d'air secondaire (2) s'étendant radialement dans une chambre entre disques (3), sachant que dans la zone d'évacuation du tube sont disposés dans le sens longitudinal de la turbine à gaz des éléments déflecteurs (6) pour dévier l'air de refroidissement afin d'éviter un tourbillonnement supplémentaire ainsi que des pertes de pression, **caractérisé en ce que** l'élément déflecteur est un anneau déflecteur (5) conique arrangeable sur un arbre de compresseur (4).

2. Réducteur de tourbillons de construction tubulaire destiné à guider l'air de refroidissement dans un compresseur (1) d'une turbine à gaz avec au moins un tube d'air secondaire (2) s'étendant radialement dans une chambre entre disques (3), sachant que dans la zone d'évacuation du tube sont arrangeables des éléments déflecteurs (6) pour dévier l'air secondaire sous un angle prédéfini dans le sens longitudinal par rapport à l'axe de rotation (7) de l'arbre de compresseur (4) d'un compresseur (1) ou - alternativement - perpendiculairement à l'axe de rotation (7) et dans le sens opposé au sens de rotation de l'arbre de compresseur (4), **caractérisé en ce que** l'élément déflecteur est une plaque déflectrice (8) coudée à 45° environ par rapport à la ligne médiane du tube d'air secondaire (2).

3. Réducteur de tourbillons de construction tubulaire destiné à guider l'air de refroidissement dans un compresseur (1) d'une turbine à gaz, avec au moins un tube d'air secondaire (2) s'étendant radialement dans une chambre entre disques (3), sachant que dans la zone d'évacuation du tube sont arrangeables des éléments déflecteurs (6) pour dévier l'air secondaire sous un angle prédéfini dans le sens longitudinal par rapport à l'axe de rotation (7) de l'arbre de compresseur (4) d'un compresseur (1) ou - alternativement - perpendiculairement à l'axe de rotation (7) et dans le sens opposé au sens de rotation de l'arbre de compresseur (4), **caractérisé en ce que** l'élément déflecteur est un tube d'évacuation formé en une seule pièce avec le tube d'air secondaire (2) et coudé à 90° environ par rapport à sa ligne médiane.

4. Réducteur de tourbillons selon la revendication n° 2 ou 3, **caractérisé en ce que** l'élément déflecteur (8) est orientable dans le sens longitudinal de l'arbre de compresseur (4) ou bien perpendiculairement à l'axe de rotation et dans le sens opposé au sens de rotation de l'arbre de compresseur (4), pivoté de 90° autour de l'axe longitudinal du tube d'air secondaire (2).
